# EUROPEAN PATENT SPECIFICATION

(11) **EP 3 205 909 B1**
(45) Date of publication and mention of the grant of the patent: **24.04.2019**
(21) Application number: 15848598.7
(22) Date of filing: 25.09.2015
(51) Int. Cl.: F16J 9/16, F02F 5/00, F16J 9/06, F16J 9/14

(54) **OIL RING**
ÖLRING
BAGUE DE LUBRIFICATION

(30) Priority: 07.10.2014 JP 2014206555
(43) Date of publication of application: 16.08.2017
(73) Proprietor: Kabushiki Kaisha Riken, Tokyo 102-8202 (JP)
(72) Inventor: YOSHIDA, Hideki, Kashiwazaki-shi Niigata 945-8555 (JP)
(74) Representative: Hooiveld, Arjen Jan Winfried
(86) International application number: PCT/JP2015/077165
(87) International publication number: WO 2016/056406

(56) References cited:
- CN-Y- 201 193 698
- JP-A- H0 777 278
- JP-A- 2002 106 715
- JP-B2- 3 436 287
- JP-Y2- H0 326 295
- US-A- 2 705 178

## Description

### Technical Field

The present invention relates to an oil ring.

### Background Art

An oil ring, which is used in an internal combustion engine such as in an automobile, is one of piston rings and is a ring to be assembled into a ring groove provided on an outer circumferential surface of a piston. The oil ring slides against a cylinder inner wall to appropriately adjust the thickness of a film of lubricating oil (oil film) that is formed on the cylinder inner wall. The oil ring has a joint in a shape known as a right angle joint (straight joint), which is a portion of the main body being cut out for assembling the oil ring onto the ring groove, and it has been a challenge to suppress the flow of the lubricating oil into the combustion chamber (oil upward movement) at the joint.

In view of the above problem, for example, an oil ring described in Patent Literature 1 has a joint in a shape known as a bevel joint (angle joint) formed on a metal piston ring to suppress the flow of the lubricating oil at the joint.

### Citation List

### Patent Literature

Patent Literature 1: Japanese Unexamined Patent Publication No. 2002-106715

### Summary of Invention

### Technical Problem

With the oil ring described in the above-mentioned Patent Literature 1, the lubricating oil flows diagonally along the shape of the joint but there is room for additional improvement in the effect of suppressing the flow of the lubricating oil. Furthermore, since this conventional oil ring employs the bevel joint, the ends of the joint tend to misalign when assembling the oil ring to the piston. Assembling the oil ring to the piston with the butt ends misaligned may cause breakage of the oil ring and formation of scratches on the cylinder inner wall.

It is an object of one aspect of the present invention to provide an oil ring capable of sufficiently suppressing the flow of a lubricating oil at a joint and of improving assembly to a piston.

### Solution to Problem

An oil ring according to a first aspect of the present invention includes: an annular main body having first and second rails opposing each other, and a column portion joining the first and second rails and being provided with a plurality of oil thru-holes; and a joint being formed on the main body, wherein the joint includes, on a first rail side, a first protruding portion protruding from one butt end toward the other butt end, and a first receiving portion for receiving the first protruding portion at the other butt end, on a second rail side, a second protruding portion protruding from the other butt end toward the one butt end, and a second receiving portion for receiving the second protruding portion at the one butt end, and on an outer circumferential surface side of the main body, a first hook protruding from a distal end of the first protruding portion toward the second rail, and a second hook protruding from a distal end of the second protruding portion toward the first rail and engageable with the first hook.

This oil ring includes, at the joint, the first hook protruding from the distal end of the first protruding portion toward the second rail, and the second hook protruding from the distal end of the second protruding portion toward the first rail. These first hook and second hook of the joint form a crank on the outer circumferential surface side of the main body. Thus, a lubricating oil flows through the joint meanders through the crank so that the flow of the lubricating oil at the joint is sufficiently suppressed. Additionally, the first hook and the second hook are provided so as to be engageable with each other. With such a configuration, the first hook and the second hook are engaged with each other when assembling the oil ring to a piston to thereby restrict expansion of the oil ring. Consequently, assembly of the oil ring to the piston is improved.

The oil ring may further include: on an inner circumferential surface side and the first rail side of the main body, a first male portion protruding from the first protruding portion toward the first receiving portion, and a first female portion for receiving the first male portion at the first receiving portion; and on the inner circumferential surface side and the second rail side of the main body, a second male portion protruding from the second protruding portion toward the second receiving portion, and a second female portion for receiving the second male portion at the second receiving portion. With such a configuration, cranks are formed in a thickness direction of the oil ring on the first rail side and the second rail side of the joint. These cranks close when the oil ring is in use so that the lubricating oil that flows in the thickness direction of the oil ring is blocked.

The first hook may be formed by bending the distal end of the first protruding portion located on an outer circumferential side relative to an inner circumferential surface of the column portion, and the second hook may be formed by bending the distal end of the second protruding portion located on the outer circumferential side relative to the inner circumferential surface of the column portion. Thus, the first hook and the second hook have sufficient thickness so that strength thereof is guaranteed.

Furthermore, only a front edge portion of the first hook and a front edge portion of the second hook may be engageable with each other. Thus, lengths of the first hook and the second hook in a width direction are limited so that assembly of the oil ring to the piston is facilitated.

Furthermore, at least one of an angle between the first protruding portion and the first hook and an angle between the second protruding portion and the second hook may be an acute angle. Thus, a degree of meandering of the lubricating oil due to the crank is greater so that the effect of suppressing the flow of the lubricating oil is improved.

The oil ring may further include an annular coil expander provided along the inner circumferential surface side of the main body and having a sealing resin tube for sealing the joint from the inner circumferential surface side of the main body, wherein the sealing resin tube is provided in a length capable of sealing a space formed between end surfaces of the column portion when the first protruding portion abuts on the first receiving portion and the second protruding portion abuts on the second receiving portion. In this case, the joint can be sealed with the sealing resin tube from the inner circumferential surface side of the main body. Thus, the lubricating oil that flows from the inner circumferential surface side to the outer circumferential surface side of the main body at the joint is blocked. Sealing the joint with the sealing resin tube also limits wear of the main body around the joint caused by the coil expander.

The sealing resin tube may be provided in a length capable of sealing the space formed between the end surfaces of the column portion when the first hook and the second hook are engaged with each other. Thus, the space formed at the joint due to expansion of the oil ring is reliably sealed with the sealing resin tube.

Chinese patent publication no. 201 193 698 discloses an oil ring according to the preamble of claim 1.

### Advantageous Effects of Invention

According to one aspect of the present invention, the oil ring capable of sufficiently suppressing the flow of the lubricating oil to a combustion chamber at the joint and of improving assembly to the piston can be provided.

### Brief Description of Drawings

FIG. 1 is a perspective view of an oil ring according to an embodiment of the present invention.
FIG. 2 is an exploded perspective view of the oil ring according to an embodiment of the present invention.
FIG. 3 is an enlarged perspective view of a main portion of a joint of the oil ring according to an embodiment of the present invention.
FIG. 4 is an enlarged perspective view of a main portion of one butt end of the oil ring according to an embodiment of the present invention.
FIG. 5 is an enlarged side view of a main portion of the joint with the oil ring according to an embodiment of the present invention assembled to a piston.
FIGS. 6(a) to 6(d) are schematic enlarged views illustrating a method for forming the one butt end of the oil ring according to an embodiment of the present invention.
FIG. 7 is an enlarged end view of a main portion of a part of the joint of the oil ring according to an embodiment of the present invention.
FIG. 8 is an enlarged plan view of a main portion of the joint of the oil ring according to an embodiment of the present invention.
FIG. 9 is an enlarged perspective view of a main portion of the joint of the oil ring according to a variation.

### Description of Embodiments

Preferred embodiments of the present invention are described below with reference to the accompanying drawings. In the following description, like reference numerals are used for like elements or elements with like functions, and repeated descriptions will be omitted.

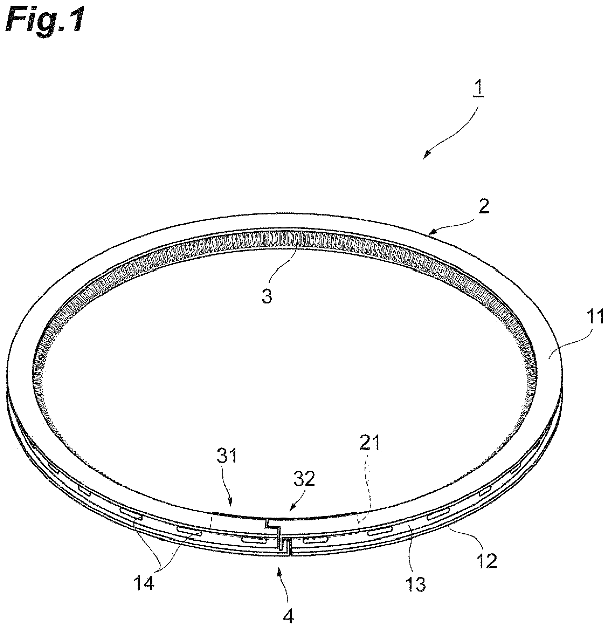

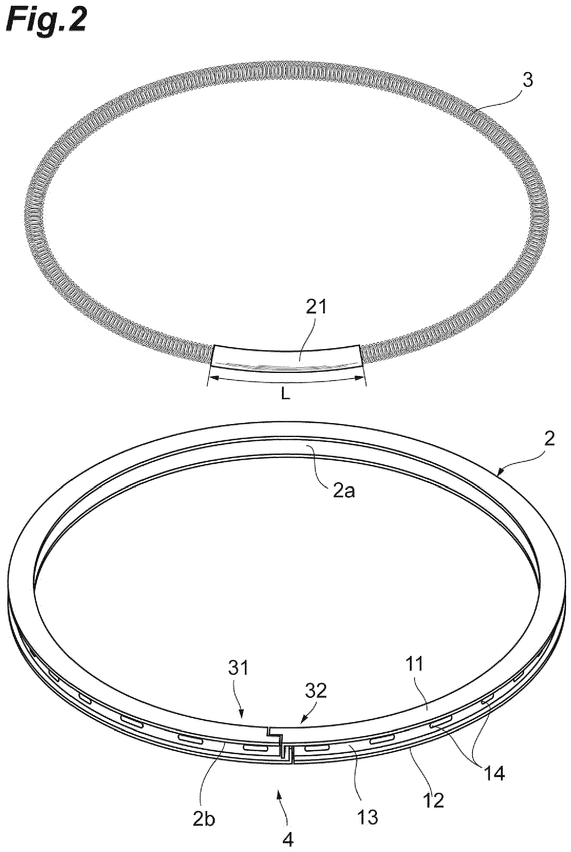

FIG. 1 is a perspective view of an oil ring according to an embodiment of the present invention. FIG. 2 is an exploded perspective view of the oil ring according to an embodiment of the present invention. As shown in FIGS. 1 and 2, an oil ring 1 is a so-called two-piece oil ring that includes an annular main body 2 in which a joint 4 is formed, and an annular coil expander 3 provided along an inner circumferential surface 2a side of the main body 2.

This oil ring 1 is used assembled to a ring groove provided on an outer circumferential surface of a piston of an internal combustion engine such as used in an automobile. The main body 2 of the oil ring 1 is in contact with a cylinder inner wall at a substantially constant pressure due to tangential force of the coil expander 3. The oil ring 1 applies a lubricating oil in between first and second rails 11, 12 (to be discussed in detail below) of the main body 2 to the cylinder inner wall as the piston is driven, and scrapes away excessive lubricating oil with the first rail 11 and the second rail 12. Thus, the oil ring 1 functions to form an oil film of an appropriate thickness on the cylinder inner wall.

The main body 2 is formed, for example, from cast iron or steel that contains a plurality of metallic elements to have sufficient strength, heat resistance, and elasticity. An outer circumferential surface 2b and other parts of the main body 2 are subjected to surface reforming with, for example, a hard chromium plated layer, a chromium nitride layer, or an iron nitride layer to improve wear resistance of the main body 2.

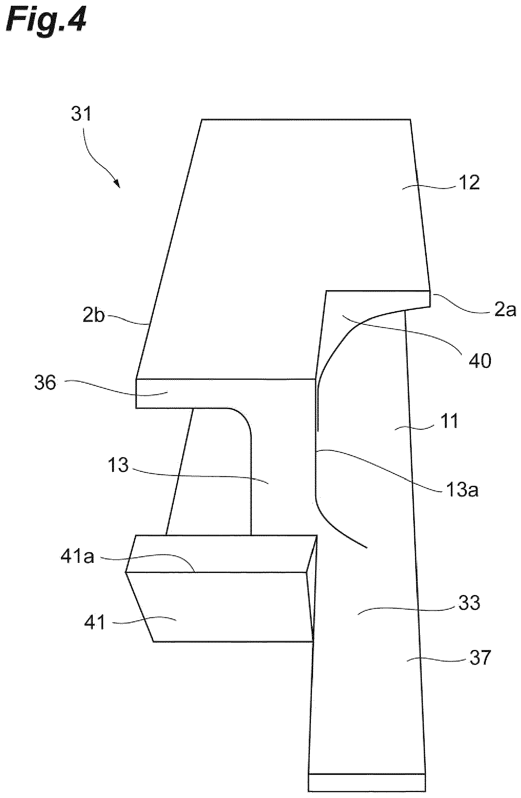

The main body 2 of the oil ring 1 includes the annular first rail 11 and the annular second rail 12 opposing each other in a width direction of the oil ring 1, and an annular column portion 13 that joins center portions of the first and second rails 11, 12 with each other. The first and second rails 11, 12 of the main body 2 are integrally formed with the column portion 13, and the first and second rails 11, 12 have a thickness that is greater than a thickness of the column portion 13. The inner circumferential surface 2a of the main body 2 is caved in toward the column portion 13 in a substantially curved surface shape so as to accommodate the coil expander 3 (see, FIG. 4).

In a central portion of the column portion 13 in a width direction, oil thru-holes 14, which are arranged in a row along a circumferential direction of the oil ring 1, are provided. Each of the oil thru-holes 14 has a substantially oval-shaped cross section along the circumferential direction. The oil thru-holes 14 are formed, for example, by cutting or laser drilling. The lubricating oil that passes through the oil thru-holes 14 is supplied from an inner circumferential side to an outer circumferential side of the column portion 13 and is returned from the outer circumferential side to the inner circumferential side of the column portion 13.

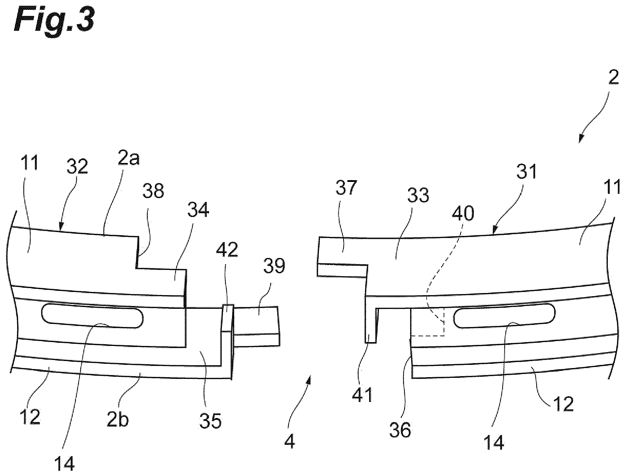

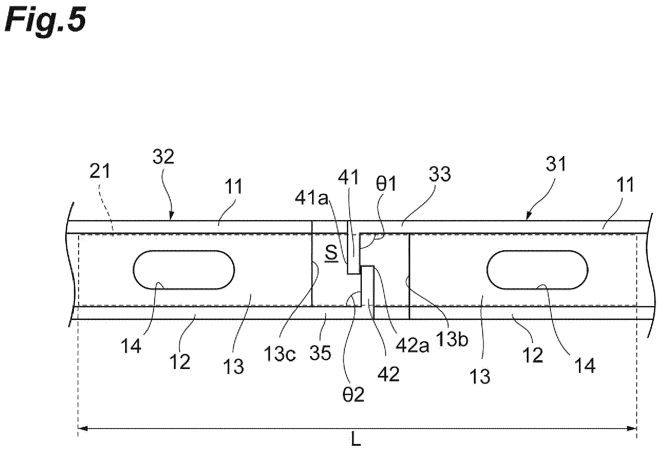

FIG. 3 is an enlarged perspective view of a main portion of the joint of the oil ring according to an embodiment of the present invention, FIG. 4 is an enlarged perspective view of a main portion of one butt end of the oil ring according to an embodiment of the present invention, and FIG. 5 is an enlarged side view of a main portion of the joint with the oil ring according to an embodiment of the present invention assembled to a piston.

As shown in FIGS. 3 to 5, the joint 4 is a portion formed by cutting out a part of the main body 2 and is provided to ensure ease of assembly of the oil ring 1. As shown in FIG. 3, one butt end 31 and the other butt end 32 face each other at a predetermined distance at the joint 4 before the oil ring 1 is attached to the piston.

As shown in FIG. 3 and other figures, the joint 4 is provided, on a first rail 11 side of the main body 2, with a first protruding portion 33 that protrudes from the one butt end 31 toward the other butt end 32 and a first receiving portion 34 that receives the first protruding portion 33 at the other butt end 32. The joint 4 is also provided, on a second rail 12 side of the main body 2, with a second protruding portion 35 that protrudes from the other butt end 32 toward the one butt end 31 and a second receiving portion 36 that receives the second protruding portion 35 at the one butt end 31.

More specifically, at the first protruding portion 33, the first rail 11 protrudes from the one butt end 31 in a substantially rectangular shape in cross-section. At the first receiving portion 34, the first rail 11 and the column portion 13 of the other butt end 32 are cut out in accordance with an amount of protrusion of the first protruding portion 33.

Similarly, at the second protruding portion 35, the second rail 12 protrudes from the other butt end 32 in a substantially rectangular shape in cross-section. At the second receiving portion 36, the second rail 12 and the column portion 13 of the one butt end 31 are cut out in accordance with an amount of protrusion of the second protruding portion 35.

As shown in FIG. 3 and other figures, the main body 2 is provided, on the inner circumferential surface 2a side and on the first rail 11 side, with a first male portion 37 that protrudes from the first protruding portion 33 toward the first receiving portion 34 and a first female portion 38 that receives the first male portion 37 at the first receiving portion 34. The main body 2 is also provided, on the inner circumferential surface 2a side and on the second rail 12 side, with a second male portion 39 that protrudes from the second protruding portion 35 toward the second receiving portion 36 and a second female portion 40 that receives the second male portion 39 at the second receiving portion 36.

More specifically, at the first male portion 37, substantially half of the first protruding portion 33 on the inner circumferential surface 2a side and on the first rail 11 side protrudes in a substantially rectangular shape in cross-section. At the first female portion 38, substantially half of the first receiving portion 34 on the inner circumferential surface 2a side and on the first rail 11 side is cut out along a shape corresponding to the shape of the first male portion 37.

Similarly, at the second male portion 39, substantially half of the second protruding portion 35 on the inner circumferential surface 2a side and on the second rail 12 side protrudes in a substantially rectangular shape in cross-section. At the second female portion 40, substantially half of the second receiving portion 36 on the inner circumferential surface 2a side and on the second rail 12 side is cut out along a shape corresponding to the shape of the second male portion 39.

As shown in FIG. 3 and other figures, the main body 2 is also provided, on the outer circumferential surface 2b side, with a first hook 41 that protrudes from a distal end of the first protruding portion 33 toward the second rail 12 and a second hook 42 that protrudes from a distal end of the second protruding portion 35 toward the first rail 11. As shown in FIG. 5, the first hook 41 and the second hook 42 are provided so as to be engageable with each other, such as when the main body 2 is expanded circumferentially. It should be noted that only a front edge portion 41a of the first hook 41 and a front edge portion 42a of the second hook 42 may be provided to be engageable with each other.

More specifically, as shown in FIG. 4, the first hook 41, which is the distal end of the first protruding portion 33 that is located on the outer circumferential side relative to an inner circumferential surface 13a of the column portion 13, is bent in a substantially rectangular shape in cross-section. That is, a width of the first hook 41 substantially corresponds to a length in a thickness direction from the inner circumferential surface 13a of the column portion 13 to the outer circumferential surface 2b of the main body 2. As shown in FIG. 5, the first hook 41 is bent so that an angle θ1 between the first hook 41 and the first protruding portion 33 is substantially 90 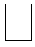 . The angle θ1 is not limited to a right angle and may be an acute angle.

Similarly, the second hook 42, which is the distal end of the second protruding portion 35 that is located on the outer circumferential side relative to the inner circumferential surface 13a of the column portion 13, is bent in a substantially rectangular shape in cross-section. That is, a width of the second hook 42 also substantially corresponds to the length in the thickness direction from the inner circumferential surface 13a of the column portion 13 to the outer circumferential surface 2b of the main body 2. As shown in FIG. 5, the second hook 42 is bent so that an angle θ2 between the second hook 42 and the second protruding portion 35 is substantially 90‾. The angle θ2 is not limited to a right angle and may be an acute angle. The angle θ1 and the angle θ2 may be the same or may be different.

As shown in FIG. 2, the coil expander 3 is an annular spring-like component and is formed, for example, from wire such as oil-quenched spring steel. The coil expander 3 is provided with a resin tube (sealing resin tube) 21. This resin tube 21 is formed from a resin material (for example, PTFE (polytetrafluoroethylene)) having excellent oil resistance, heat resistance, and strength, and covers a part of the coil expander 3.

As shown in FIG. 5, the resin tube 21 seals the joint 4 provided on the main body 2 from the inner circumferential surface 2a side of the main body 2 when the oil ring 1 is assembled to the piston. More specifically, a length L of the resin tube 21 is a length that is capable of sealing a space formed between end surfaces 13b, 13c of the column portion 13 when the main body 2 expands circumferentially and the first hook 41 and the second hook 42 are engaged with each other. That is, the length L of the resin tube 21 is equal to or longer than the space between the end surfaces 13b, 13c of the column portion 13 along the circumferential direction when the first hook 41 and the second hook 42 are engaged with each other. In this embodiment, the length L of the resin tube 21 is equal to or longer than the length along the circumferential direction of the main body 2 from an edge, remote from the joint, of the oil thru-hole 14 closest to the one butt end 31 to an edge, remote from the joint, of the oil thru-hole 14 closest to the other butt end 32. The resin tube 21 has a diameter that is equal to or greater than a length between the first rail 11 and the second rail 12 in the width direction.

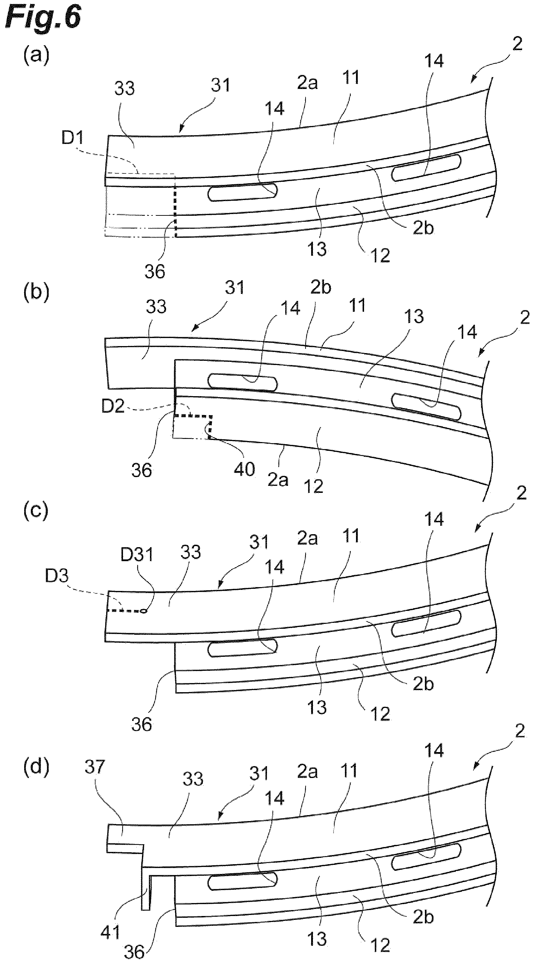

Next, an example of a method for forming the joint 4 in the main body 2 of the oil ring 1 according to an embodiment of the present invention is described with reference to FIGS. 6(a) to 6(d). FIGS. 6(a) to 6(d) are schematic views illustrating a method for forming the one butt end of the oil ring according to an embodiment of the present invention. As shown in FIG. 6(a), after cutting out a portion of the main body 2 to be the joint 4, a portion of the second rail 12 and a portion of the column portion 13 of the one butt end 31 are removed along line D1. The portions of the second rail 12 and the column portion 13 are removed, for example, by laser cutting or electrodischarge machining from the outer circumferential surface 2b side of the main body 2. The first protruding portion 33 and the second receiving portion 36 are thus formed on the one butt end 31. The removed portions in the second rail 12 and the column portion 13 are shown by phantom lines in FIG. 6(a).

Next, as shown in FIG. 6(b), a portion of the second rail 12 of the one butt end 31 is removed along line D2. The portion of the second rail 12 is removed, for example, by laser cutting or by cutting with a grindstone from the second rail 12 side. The second female portion 40 is thus formed on the second receiving portion 36. The removed portion in the second rail 12 is shown by phantom lines in FIG. 6(b).

Next, as shown in FIG. 6(c), after forming cut line D3 along the circumferential direction from the distal end of the first protruding portion 33 to near a center portion of the first protruding portion 33, the distal end of the first protruding portion 33 on the outer circumferential side of the main body 2 is bent toward the second rail 12, as shown in FIG. 6(d). Thus, on the distal end of the first protruding portion 33, the first male portion 37 is formed on the inner circumferential side and the first hook 41 is formed on the outer circumferential side. It should be noted that, as shown in FIG. 6(c), performing a circular arc process on an end D31 of the cut line D3 on a base end side of the first protruding portion 33 facilitates the subsequent bending process. Applying the method described above to the other butt end 32 forms the joint 4 of the oil ring 1 according to an embodiment of the present invention.

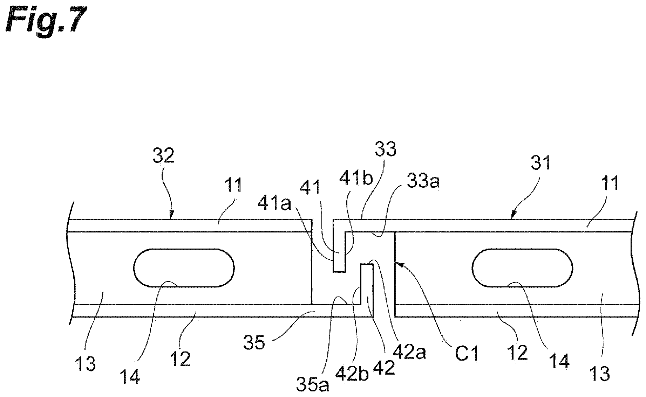

The oil ring 1 having a configuration of the joint 4 formed by the above method is provided, at the joint 4, with the first hook 41 that protrudes from the distal end of the first protruding portion 33 toward the second rail 12 and a second hook 42 that protrudes from the distal end of the second protruding portion 35 toward the first rail 11. Thus, as shown in FIG. 7, a crank C1 is formed on the outer circumferential surface 2b side of the joint 4 by an inner surface 33a of the first protruding portion 33, the distal end portion 42a of the second hook 42, a surface 41b of the first hook 41 that faces the second hook 42, a surface 42b of the second hook 42 that faces the first hook 41, the distal end portion 42a of the first hook 41, and an inner surface 35a of the second protruding portion 35. Consequently, the lubricating oil that flows through the joint 4 meanders through the crank C1 so that the flow of the lubricating oil at the joint 4 is sufficiently suppressed.

Additionally, the first hook 41 and the second hook 42 are provided so as to be engageable with each other when, for example, the main body 2 is expanded circumferentially. With such a configuration, the first hook 41 and the second hook 42 are engaged with each other when the oil ring 1 is assembled to the piston. This ristricts expansion of the oil ring 1 so that assembly of the oil ring 1 to the piston is improved.

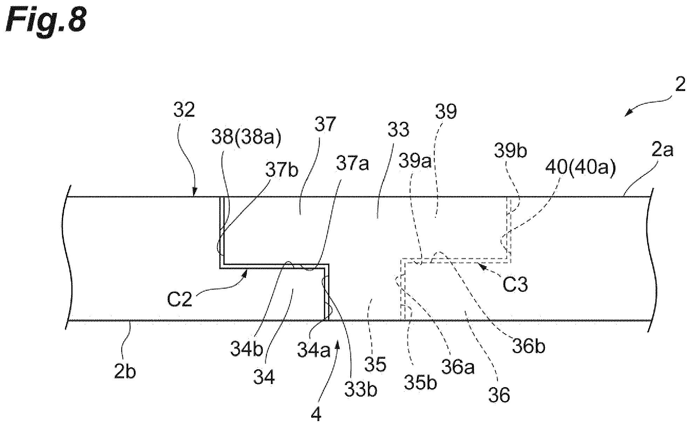

Furthermore, the oil ring 1 is provided with the first male portion 37 and the first female portion 38 on the first rail 11 side and the inner circumferential surface 2a side of the main body 2. Due to this configuration, as shown in FIG. 8, a crank C2 is formed on the first rail 11 side of the joint 4 by a distal surface 34a of the first receiving portion 34, a surface 33b of the first protruding portion 33 that faces the distal surface 34a, a surface 34b of the first receiving portion 34 that faces the first male portion 37, a surface 37a of the first male portion 37 that faces the first receiving portion 34, a distal surface 38a of the first female portion 38, and a distal surface 37b of the first male portion 37. The oil ring 1 is also provided with the second male portion 39 and the second female portion 40 on the second rail 12 side and the inner circumferential surface 2a side of the main body 2. Due to this configuration, a crank C3 is formed on the second rail 12 side of the joint 4 by a distal surface 36a of the second receiving portion 36, a surface 35b of the second protruding portion 35 that faces the distal surface 36a, a surface 36b of the second receiving portion 36 that faces the second male portion 39, a surface 39a of the second male portion 39 that faces the second receiving portion 36, a distal surface 40a of the second female portion 40, and a distal surface 39b of the second male portion 39. The cranks C2, C3 close when the oil ring 1 is in use so that the lubricating oil that flows in the thickness direction of the oil ring 1 is blocked.

The first hook 41 is formed by bending the distal end of the first protruding portion 33 that is located on the outer circumferential side relative to the inner circumferential surface 13a of the column portion 13, and the second hook 42 is formed by bending the distal end of the second protruding portion 35 that is located on the outer circumferential side relative to the inner circumferential surface 13a of the column portion 13. Thus, the first hook 41 and the second hook 42 have sufficient thickness so that strength thereof is guaranteed.

Only the front edge portion 41a of the first hook 41 and the front edge portion 42a of the second hook 42 are engageable with each other. Thus, lengths of the first hook 41 and the second hook 42 in the width direction are limited so that assembly of the oil ring 1 to the piston is facilitated.

The angle θ1 between the first protruding portion 33 and the first hook 41 and the angle θ2 between the second protruding portion 35 and the second hook 42 may be acute angles. Thus, a degree of meandering of the lubricating oil due to the crank C1 is greater so that the effect of suppressing the flow of the lubricating oil is improved.

The oil ring 1 is also provided with the annular coil expander 3 which is provided along the inner circumferential surface 2a side of the main body 2 and which has the resin tube 21 that seals the joint 4 from the inner circumferential surface 2a side of the main body 2. The resin tube 21 is provided in the length L that is capable of sealing a space S formed between the end surfaces of the column portion 13 when the main body 2 expands circumferentially and the first hook 41 and the second hook 42 are engaged with each other. In this case, the joint 4 can be sealed with the resin tube 21 from the inner circumferential surface 2a side of the main body 2. Thus, the lubricating oil that flows from the inner circumferential surface 2a side to the outer circumferential surface 2b side of the main body 2 at the joint 4 is blocked by the resin tube 21. Sealing the joint 4 with the resin tube 21 also limits wear of the main body 2 around the joint 4 caused by the coil expander 3.

The present invention is not limited to the above embodiment. For example, the resin tube 21 may be provided in the length L that is capable of sealing the space S formed between the end surfaces 13b, 13c of the column portion 13 when the first protruding portion 33 abuts on the first receiving portion 34 and the second protruding portion 35 abuts on the second receiving portion 36. That is, the length L of the resin tube 21 may be equal to or longer than the space along the circumferential direction between the end surfaces 13b, 13c of the column portion 13 when the first hook 41 and the second hook 42 are engaged with each other and equal to or shorter than the length along the circumferential direction of the main body 2 from a joint-side edge of the oil thru-hole 14 that is closest to the one butt end 31 to a joint-side edge of the oil thru-hole 14 that is closest to the other butt end 32. The sealing effect of the joint 4 with the resin tube 21 is also achieved in this case.

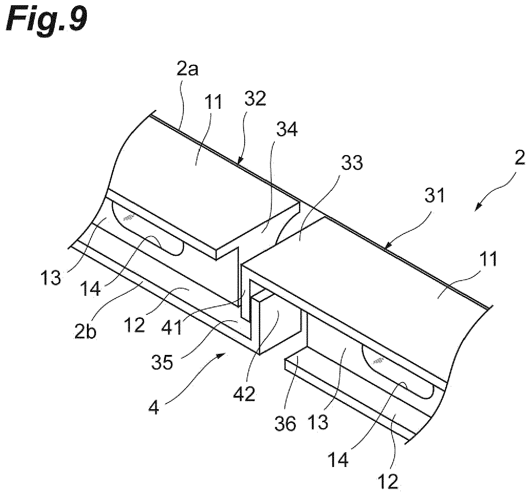

In the above embodiment, the joint 4 is provided with the first male portion 37 and the first female portion 38 on the first rail 11 side and is provided with the second male portion 39 and the second female portion 40 on the second rail 12 side. However, for example, as shown in FIG. 9, a distal end portion of the first protruding portion 33 and a distal end portion of the first receiving portion 34 may be formed flat. Similarly, a distal end portion of the second protruding portion 35 and a distal end portion of the second receiving portion 36 on the second rail 12 side may be formed flat. In this case, the joint 4 has a simple configuration.

Additionally, for example, the first hook 41 may be formed by bending the distal end of the first protruding portion 33 that is located on the outer circumferential side of the first male portion 37. Similarly, the second hook 42 may be formed by bending the distal end of the second protruding portion 35 that is located on the outer circumferential side of the second male portion 39.

### Reference Signs List

1...oil ring, 2...main body, 2a...inner circumferential surface, 2b...outer circumferential surface, 3...coil expander, 4...joint, 11...first rail, 12...second rail, 13...column portion, 14...oil thru-hole, 21 resin tube (sealing resin tube), 31...one butt end, 32...other butt end, 33...first protruding portion, 34...first receiving portion, 35...second protruding portion, 36...second receiving portion, 37...first male portion, 38...first female portion, 39...second male portion, 40...second female portion, 41...first hook, 41a, 42a...front edge portion, 42...second hook, L...length, S...space.

## Claims

1. An oil ring (1) comprising:
an annular main body (2) including first and second rails (11, 12) opposing each other, and a column portion (13) joining the first and second rails (11, 12) and being provided with a plurality of oil thru-holes (14); and
a joint (4) being formed on the main body (2),
wherein the joint (4) includes:
on a first rail (11) side, a first protruding portion (33) protruding from one butt end (31) toward the other butt end (32), and a first receiving portion (34) for receiving the first protruding portion (33) at the other butt end (32);
on a second rail (12) side, a second protruding portion (35) protruding from the other butt end (32) toward the one butt end (31), and a second receiving portion (36) for receiving the second protruding portion (35) at the one butt end (31); **characterized in that** said oil ring (1) further comprises
on an outer circumferential surface (26) side of the main body (2), a first hook (41) protruding from a distal end of the first protruding portion (33) toward the second rail (12), and a second hook (42) protruding from a distal end of the second protruding portion (35) toward the first rail (11) and engageable with the first hook (41).

2. The oil ring (1) according to claim 1, further comprising:
on an inner circumferential surface (2a) side and the first rail (11) side of the main body (2), a first male portion (37) protruding from the first protruding portion (33) toward the first receiving portion (34), and a first female portion (38) for receiving the first male portion (37) at the first receiving portion (34); and
on the inner circumferential surface (2a) side and the second rail (12) side of the main body (2), a second male portion (39) protruding from the second protruding portion (35) toward the second receiving portion (36), and a second female portion (40) for receiving the second male portion (39) at the second receiving portion (36).

3. The oil ring (1) according to claim 1 or 2, wherein the first hook (41) is formed by bending the distal end of the first protruding portion (33) located on an outer circumferential side relative to an inner circumferential surface (13a) of the column portion (13), and the second hook (42) is formed by bending the distal end of the second protruding portion (35) located on the outer circumferential side relative to the inner circumferential surface (13a) of the column portion (13).

4. The oil ring (1) according to any one of claims 1 to 3, wherein only a front edge portion (41a) of the first hook (41) and a front edge portion (42a) of the second hook (42) are engageable with each other.

5. The oil ring (1) according to any one of claims 1 to 4, wherein at least one of an angle between the first protruding portion (33) and the first hook (41) and an angle between the second protruding portion (35) and the second hook (42) is an acute angle.

6. The oil ring (1) according to any one of claims 1 to 5, further comprising an annular coil expander (3) provided along the inner circumferential surface (2a) side of the main body (2) and having a sealing resin tube (21) for sealing the joint (4) from the inner circumferential surface (2a) side of the main body (2),
wherein the sealing resin tube (21) is provided in a length (L) capable of sealing a space (S) formed between end surfaces of the column portion (13) when the first protruding portion (33) abuts on the first receiving portion (34) and the second protruding portion (35) abuts on the second receiving portion (36).

7. The oil ring (1) according to claim 6, wherein the sealing resin tube (21) is provided in a length (L) capable of sealing the space (S) formed between the end surfaces of the column portion (13) when the first hook (41) and the second hook (42) are engaged with each other.

## Patentansprüche

1. Ölring (1), der aufweist:
einen ringförmigen Hauptkörper (2), der eine erste und zweite Schiene (11, 12), die einander gegenüberliegend sind, und ein Spaltenbereich (13) aufweist, der die erste und zweite Schiene (11, 12) verbindet und mit einer Vielzahl von Öldurchflussöffnungen (14) vorgesehen ist; und
ein Gelenk (4), das am Hauptkörper (2) ausgebildet ist,
wobei das Gelenk (4) aufweist:
an einer Seite der ersten Schiene (11) einen ersten hervorstehenden Bereich (33), der von einem Kopfende (31) in Richtung des anderen Kopfendes (32) hervorsteht, und einen ersten Aufnahmebereich (34), um den ersten hervorstehenden Bereich (33) an dem anderen Kopfende (32) aufzunehmen;
an einer Seite der zweiten Schiene (12) einen zweiten hervorstehenden Bereich (35), der von dem anderen Kopfende (32) in Richtung des einen Kopfendes (31) hervorsteht, und einen zweiten Aufnahmebereich (36), um den zweiten hervorstehenden Bereich (35) an dem einen Kopfende (31) aufzunehmen;
**dadurch gekennzeichnet, dass** der Ölring (1) weiterhin aufweist
an einer Seite einer Außenumfangsfläche (26) des Hauptkörpers (2) einen ersten Haken (41), der von einem distalen Ende des ersten hervorstehenden Bereichs (33) in Richtung der zweiten Schiene (12) hervorsteht, und einen zweiten Haken (42), der von einem distalen Ende des zweiten hervorstehenden Bereichs (35) in Richtung der ersten Schiene (11) hervorsteht und in den ersten Haken (41) eingreifbar ist.

2. Ölring (1) nach Anspruch 1, der weiterhin aufweist:
an einer Seite der Innenumfangsfläche (2a) und der Seite der ersten Schiene (11) des Hauptkörpers (2) einen ersten nach außen verlaufenden Bereich (37), der vom ersten hervorstehenden Bereich (33) in Richtung des ersten Aufnahmebereichs (34) hervorsteht, und einen ersten zurückgesetzten Bereich (38), um den ersten nach außen verlaufenden Bereich (37) an dem ersten Aufnahmebereich (34) aufzunehmen; und
an der Seite der Innenumfangsfläche (2a) und der Seite der zweiten Schiene (12) des Hauptkörpers (2) einen zweiten nach außen verlaufenden Bereich (39), der vom zweiten hervorstehenden Bereich (35) in Richtung des zweiten Aufnahmebereichs (36) hervorsteht, und einen zweiten zurückgesetzten Bereich (40), um den zweiten nach außen verlaufenden Bereich (39) an dem zweiten Aufnahmebereich (36) aufzunehmen.

3. Ölring (1) nach Anspruch 1 oder 2, wobei der erste Haken (41) durch Biegen des distalen Endes des ersten hervorstehenden Bereichs (33), der an einer Außenumfangsseite bezüglich einer Innenumfangsfläche (13a) des Säulenbereichs (13) positioniert ist, ausgebildet ist, und der zweite Haken (42) durch Biegen des distalen Endes des zweiten hervorstehenden Bereichs (35), der an der Außenumfangsseite bezüglich der Innenumfangsfläche (13a) des Säulenbereichs (13) positioniert ist, ausgebildet ist.

4. Ölring (1) nach einem der Ansprüche 1 bis 3, wobei nur ein vorderer Kantenbereich (41a) des ersten Hakens (41) und ein vorderer Kantenbereiche (42a) des zweiten Hakens (42) ineinander eingreifbar sind.

5. Ölring (1) nach einem der Ansprüche 1 bis 4, wobei wenigstens einer von einem Winkel zwischen dem ersten hervorstehenden Bereich (33) und dem ersten Haken (41) und einem Winkel zwischen dem zweiten hervorstehenden Bereich (35) und dem zweiten Haken (42) ein stumpfer Winkel ist.

6. Ölring (1) nach einem der Ansprüche 1 bis 5, der weiterhin eine kreisförmige Schlauchfeder (3) aufweist, die entlang der Innenumfangsfläche (2a) des Hauptkörpers (2) vorgesehen ist und ein Abdichtungskunstharzrohr (21) aufweist, um das Gelenk (4) von der Seite der Innenumfangsfläche (2a) des Hauptkörpers (2) her abzudichten, wobei das Abdichtungskunstharzrohr (21) in einer Länge (L) vorgesehen ist, die dazu geeignet ist, einen Raum (S), der zwischen den Endflächen des Säulenbereichs (13) ausgebildet ist, zu versiegeln, wenn der erste hervorstehende Bereich (33) am ersten Aufnahmebereich (34) anliegt und der zweite hervorstehende Bereich (35) am zweiten Aufnahmebereich (36) anliegt.

7. Ölring (1) nach Anspruch 6, wobei das Abdichtungskunstharzrohr (21) in einer Länge (L) vorgesehen wird, die dazu geeignet ist, den Raum (S) abzudichten, der zwischen den Endflächen des Spaltenbereichs (13) ausgebildet ist, wenn der erste Haken (41) und der zweite Haken (42) miteinander in Eingriff stehen.

## Revendications

1. Bague de lubrification (1) comprenant :
un corps principal annulaire (2) comportant des premier et second rails (11, 12) opposés l'un à l'autre, et une portion de colonne (13) joignant les premier et second rails (11, 12) et étant pourvue d'une pluralité de trous traversants de lubrification (14) ; et
un joint (4) étant formé sur le corps principal (2),
dans laquelle le joint (4) comporte :
sur un côté premier rail (11), une première portion saillante (33) faisant saillie d'un premier embout (31) vers l'autre embout (32), et une première portion de réception (34) pour recevoir la première portion saillante (33) au niveau de l'autre embout (32) ;
sur un côté second rail (12), une seconde portion saillante (35) faisant saillie de l'autre embout (32) vers le premier embout (31), et une seconde portion de réception (36) pour recevoir la seconde portion saillante (35) au niveau du premier embout (31) ; **caractérisée en ce que** ladite bague de lubrification (1) comprend en outre
sur un côté surface circonférentielle externe (26) du corps principal (2), un premier crochet (41) faisant saillie d'une extrémité distale de la première portion saillante (33) vers le second rail (12), et un second crochet (42) faisant saillie d'une extrémité distale de la seconde portion saillante (35) vers le premier rail (11) et pouvant être mis en prise avec le premier crochet (41).

2. Bague de lubrification (1) selon la revendication 1, comprenant en outre :
sur un côté surface circonférentielle interne (2a) et le côté premier rail (11) du corps principal (2), une première portion mâle (37) faisant saillie de la première portion saillante (33) vers la première portion de réception (34), et une première portion femelle (38) pour recevoir la première portion mâle (37) au niveau de la première portion de réception (34) ; et
sur le côté surface circonférentielle interne (2a) et le côté second rail (12) du corps principal (2), une seconde portion mâle (39) faisant saillie de la seconde portion saillante (35) vers la seconde portion de réception (36), et une seconde portion femelle (40) pour recevoir la seconde portion mâle (39) au niveau de la seconde portion de réception (36).

3. Bague de lubrification (1) selon la revendication 1 ou 2, dans laquelle le premier crochet (41) est formé par cintrage de l'extrémité distale de la première portion saillante (33) située sur un côté circonférentiel externe par rapport à une surface circonférentielle interne (13a) de la portion de colonne (13), et le second crochet (42) est formé par cintrage de l'extrémité distale de la seconde portion saillante (35) située sur le côté circonférentiel externe par rapport à la surface circonférentielle interne (13a) de la portion de colonne (13).

4. Bague de lubrification (1) selon l'une quelconque des revendications 1 à 3, dans laquelle seules une portion de bord avant (41a) du premier crochet (41) et une portion de bord avant (42a) du second crochet (42) peuvent être mises en prise l'une avec l'autre.

5. Bague de lubrification (1) selon l'une quelconque des revendications 1 à 4, dans laquelle au moins l'un d'un angle entre la première portion saillante (33) et le premier crochet (41) et d'un angle entre la seconde portion saillante (35) et le second crochet (42) est un angle aigu.

6. Bague de lubrification (1) selon l'une quelconque des revendications 1 à 5, comprenant en outre un dispositif d'expansion de bobine annulaire (3) prévu le long du côté surface circonférentielle interne (2a) du corps principal (2) et ayant un tube de résine d'étanchéité (21) pour étanchéifier le joint (4) à partir du côté surface circonférentielle interne (2a) du corps principal (2),
dans laquelle le tube de résine d'étanchéité (21) est prévu en une longueur (L) capable d'étanchéifier un espace (S) formé entre des surfaces d'extrémité de la portion de colonne (13) lorsque la première portion saillante (33) bute sur la première portion de réception (34) et la seconde portion saillante (35) bute sur la seconde portion de réception (36).

7. Bague de lubrification (1) selon la revendication 6, dans laquelle le tube de résine d'étanchéité (21) est prévu en une longueur (L) capable d'étanchéifier l'espace (S) formé entre les surfaces d'extrémité de la portion de colonne (13) lorsque le premier crochet (41) et le second crochet (42) sont mis en prise l'un avec l'autre.
